# EUROPEAN PATENT SPECIFICATION

(11) **EP 4 293 317 B1**
(45) Date of publication and mention of the grant of the patent: **06.05.2026**
(21) Application number: 23165239.7
(22) Date of filing: 29.03.2023
(51) Int. Cl.: G01B 11/10, G01B 11/14, G01B 11/24, G01B 11/245, G01B 5/20, B61K 9/12

(54) **ONLINE HIGH-PRECISION MEASURING DEVICE AND METHOD FOR FULL-SIZE PARAMETERS OF WHEEL SET OF RAIL TRANSIT VEHICLE**
HOCHPRÄZISE ONLINE-MESSVORRICHTUNG UND VERFAHREN FÜR GRÖSSENPARAMETER EINES RADSATZES EINES SCHIENENTRANSITFAHRZEUGS
DISPOSITIF DE MESURE HAUTE PRÉCISION EN LIGNE ET PROCÉDÉ POUR MESURER DES PARAMÈTRES DE TAILLE COMPLÈTE D'UN ENSEMBLE DE ROUES D'UN VÉHICULE DE TRANSPORT FERROVIAIRE

(30) Priority: 21.02.2023 CN 202310145376
(43) Date of publication of application: 20.12.2023
(73) Proprietor: NSH-CTI Machine Tool (Jiangxi) Co., Ltd., Nanchang Jiangxi 330000 (CN)
(72) Inventor: ZHOU, Haiquan, Nanchang, 330000 (CN); PENG, Youle, Nanchang, 330000 (CN); ZHU, Desheng, Nanchang, 330000 (CN); JIANG, Xi, Nanchang, 330000 (CN); ZHOU, Wenjin, Nanchang, 330000 (CN); ZHOU, Jincheng, Nanchang, 330000 (CN); WU, Fangbo, Nanchang, 330000 (CN)
(74) Representative: JD&P Patent Attorneys Joanna Dargiewicz & Partners

(56) References cited:
- EP-B1- 1 614 602
- CN-A- 113 120 031
- DE-U1- 8 713 927
- KR-B1- 100 628 350
- US-A1- 2019 367 058

## Description

### TECHNICAL FIELD

The present disclosure relates to the technical field of online detection and measurement of geometric shape and parameters of wheel sets of rail transit vehicles, and in particular, to an online high-precision measuring device and method for full-size parameters of a wheel set of a rail transit vehicle.

### BACKGROUND

The wheel set, as a core component of the rail transit train, plays an important role in carrying, guiding, traction and braking. Chinese rail transit has the characteristics of large speed range, wide region and complex line conditions. The wheel wear always exists, and the equivalent conicity and wheel polygon overrun of the wheel set often occur. The wheel wear affects the running stability and comfort of rail transit trains, and the equivalent conicity and wheel polygon overrun of the wheel set cause snake instability and high frequency vibration and even lead to wheel damage, which directly endangers the safety and reliability of trains. Therefore, it is very important to grasp the full-size status of the wheel set timely and accurately for the safe running of rail transit trains.

The tread wear, equivalent conicity and wheel polygon of the wheel set can be obtained through computer calculation by accurately obtaining the tread profile, inner distance, diameter and tread bouncing of the two wheels of the wheel set.

The existing measurement methods are mainly as follows. First, the wheel sets are measured one by one by manually operating several hand-held measuring instruments or small mobile measuring equipment, and the measured values are input into the computer for calculation to obtain the results. However, the manual operation of hand-held measuring instruments or small mobile measuring equipment is time-consuming and inefficient, is greatly affected by human operation factors, and has insufficient measurement stability. The to-be-measured train needs to stop for a long time, resulting in the reduction of train utilization rate and poor economy. Second, the wheel sets are measured with the measuring device of the under floor wheel lathe when the train is subjected to the wheel lathing work, and the results are obtained through the computer calculation of the under floor wheel lathe itself. However, the method of measuring the wheel sets with the measuring device of the under floor wheel lathe requires the whole measuring process to be carried out during the wheel lathing of the train. Such a method is time-consuming and inefficient, such that the on-line pass-through non-stop detection cannot be realized, and the full coverage detection of a large number of trains cannot be carried out in a short time. Third, dynamic measurement and qualitative judgment are carried out by using the dynamic detection system for the outline dimension of the trackside wheel and the online polygon detection system. However, the method for dynamic measurement using the dynamic detection system for the outline dimension of the trackside wheel and the online polygon detection system has low measurement accuracy and large error. The measurement accuracy of the equivalent conicity of the wheel set cannot meet the relevant requirements. The wheel polygon can only be detected qualitatively, and the accurate amplitude of wheel polygon cannot be measured accurately.

Therefore, how to provide an online high-precision measuring device and method for full-size parameters of a wheel set of a rail transit vehicle, which is convenient and efficient, has high degree of automation and measurement accuracy, has functions of measuring the equivalent conicity and wheel polygon of the wheel set, and can achieve non-stop measurement has become an urgent problem to be solved by those skilled in the art. Therefore, the present disclosure provides a novel online high-precision measuring device and method for full-size parameters of a wheel set of a rail transit vehicle, which can effectively solve the above problems.

Prior art documents are known, such as CN 113 120 031 A, which discloses an online measuring device that includes laser sensors arranged on two sides to detect conicity of trains wheels; EP 1 614 602 B1, which discloses a device for measuring condition data of a rolling wheelset and includes contactless distance sensors to determine wheel flange height and the profile of the wheel; US 2019/367058 A1, which discloses a train wheel measurement system that includes optical sensors to detect a profile of a wheel for forming a three-dimensional image of the wheel; DE 87 13 297 U1, which discloses a device for recording condition data of a rolling wheel set by having a measuring section composed of a spring, a shock absorber, and a displacement sensor contacting a rolling wheel through a touch rail; and KR 100 628 350 B1, which discloses a scan-type wheel measuring device, including a wheel radial direction measuring means including a wheel radial rod in contact with an outer peripheral surface of a wheel to determine a movement distance in the radial direction of the wheel and is supported by a wheel radial tensioner 116 to remain in contact with the wheel.

### SUMMARY OF PRESENT INVENTION

A technical problem to be solved by the present disclosure is to provide a novel online high-precision measuring device and method for full-size parameters of a wheel set of a rail transit vehicle, aiming at the problem that existing equipment and method cannot grasp a full-size status of the wheel set effectively.

The invention is defined in claims 1 and 7 along with the dependent claims. To solve the above technical problem, embodiments of the present disclosure provide an online high-precision measuring device for full-size parameters of a wheel set of a rail transit vehicle, including: a first laser sensor, a second laser sensor, a third laser sensor, and a plurality of polygon measuring modules.

The first laser sensor is arranged on an inner side of a track bearing the wheel set to emit a laser beam to irradiate an inner side surface of the wheel set for determining an inner distance of the wheel set.

The second laser sensor is arranged below the track to emit a laser to pass through a slit formed in the track and located above the second laser sensor to irradiate a tread of the wheel set for determining a profile of the tread.

The third laser sensor is arranged on an outer side of the track to emit a laser beam to irradiate an axle lower profile of the wheel set for determining position data of the axle lower profile.

The polygon measuring module is butted with the track and is configured to measure a radial runout value of the tread of the wheel set.

The polygon measuring module includes a floating probe, and the floating probe is supported by a spring to float up and down, and maintains contact with the tread of the wheel set, such that the radial runout value of the tread of the wheel set is determined.

Preferably, the polygon measuring module further includes a guide rail and a displacement sensor. The guide rail is a main supporting structure of the polygon measuring module, and is butted with the track to support movement of the wheel set and provide guidance. The displacement sensor is configured to measure an up and down floating distance of the floating probe.

Preferably, a distance between a contact point of the floating probe and the tread of the wheel set and an inner side surface of a wheel in the wheel set is ΔL=70 mm.

Preferably, the first laser sensor, the second laser sensor and the third laser sensor each are provided with two laser sensing devices. The two laser sensing devices are symmetrically distributed along a center line of the track.

Preferably, the first laser sensor, the second laser sensor and the third laser sensor each are arranged on the track at a certain angle, and remains relatively static with the track.

Preferably, the first laser sensor, the second laser sensor and the third laser sensor each are provided with a wheel sensor configured to detect whether the wheel set reaches a measuring position.

The present disclosure further provides an online high-precision measuring method for full-size parameters of a wheel set of a rail transit vehicle, using the above measuring device, and including:
S100: measuring and storing the data of the inner distance of the wheel set using the first laser sensor, and measuring and storing the data of the profile of the tread of the wheel set using the second laser sensor;
S200: processing the measured data of the inner distance and the profile, and calculating an equivalent conicity;
S300: measuring and storing the data of the axle lower profile of the wheel set using the third laser sensor;
S400: calculating a spatial height position of a center of an axle of the wheel set relative to an upper surface of the track through algorithm analysis, so as to calculate a wheel diameter of the wheel set;
S500: rolling the wheel set from the polygon measuring module to make the floating probe contact with the tread of the wheel set, so as to measure the radial runout value of the tread;
S600: calculating a wheel polygon value of the wheel set through algorithm analysis according to the measured wheel diameter and radial runout value; and
S700: outputting a data report of the profile, the wheel diameter, the equivalent conicity, and the wheel polygon value.

Preferably, in S100 and S300, the first laser sensor, the second laser sensor and the third laser sensor each are provided with a wheel sensor at a measuring position, and the wheel sensor is configured to detect whether the wheel reaches the measuring position.

Preferably, in S100 and S300, the first laser sensor, the second laser sensor and the third laser sensor do not move with the wheel set, and remain relatively static.

Preferably, in S500, the up and down floating distance of the floating probe is determined using the displacement sensor, and the radial runout value of the tread of the wheel set is determined.

The embodiments of the present disclosure have the following beneficial effects:
(1) The online high-precision measuring device for full-size parameters of a wheel set of a rail transit vehicle of the present disclosure has high measurement accuracy and high degree of automation. In addition, the measurement process can be completed automatically without manual operation on site, to avoid the error caused by human factors.
(2) The online high-precision measuring device for full-size parameters of a wheel set of a rail transit vehicle of the present disclosure has high measurement efficiency and high integration. The measuring device can be installed at the throat track where the train passes at a high frequency, and in the whole online pass-through measuring process, the train can go without stopping. The accurate and quantitative measurement of the tread wear, equivalent conicity, and wheel polygon of all wheel sets can be completed by one pass of the train. The algorithm is convenient and the system response speed is high, which does not conflict with the train overhaul or wheel lathing operation, greatly improving the measurement efficiency and improving the efficiency of train overhaul.

### BRIEF DESCRIPTION OF THE DRAWINGS

To describe the technical solutions in the embodiments of the present disclosure or in the prior art more clearly, the following briefly describes the accompanying drawings required for describing the embodiments or the prior art. Apparently, the accompanying drawings in the following description show merely some embodiments of the present disclosure, and those of ordinary skill in the art may still derive other drawings from these accompanying drawings without creative efforts.
FIG 1 is a schematic structural diagram of a measuring device according to a first embodiment provided by the present disclosure;
FIG 2 is a structural schematic diagram of a measuring device provided by the present disclosure from another perspective;
FIG 3 is a local structure diagram when a wheel set passes through a second laser sensor in the first embodiment provided by the present disclosure;
FIG 4 is a local structure diagram when the wheel set passes through a polygon measuring module in the first embodiment provided by the present disclosure;
FIG 5 is a schematic diagram of a micro-enlarged structure when the wheel set passes through the polygon measuring module in the first embodiment provided by the present disclosure; and
FIG 6 is a flowchart of a measuring method in a second embodiment provided by the present disclosure.

### DETAILED DESCRIPTION OF THE EMBODIMENTS

The technical solutions of the embodiments of the present disclosure are clearly and completely described below with reference to the accompanying drawings. Apparently, the described embodiments are merely a part rather than all of the embodiments of the present disclosure. All other embodiments obtained by those of ordinary skill in the art based on the embodiments of the present disclosure without creative efforts shall fall within the protection scope of the present disclosure.

### Embodiment I

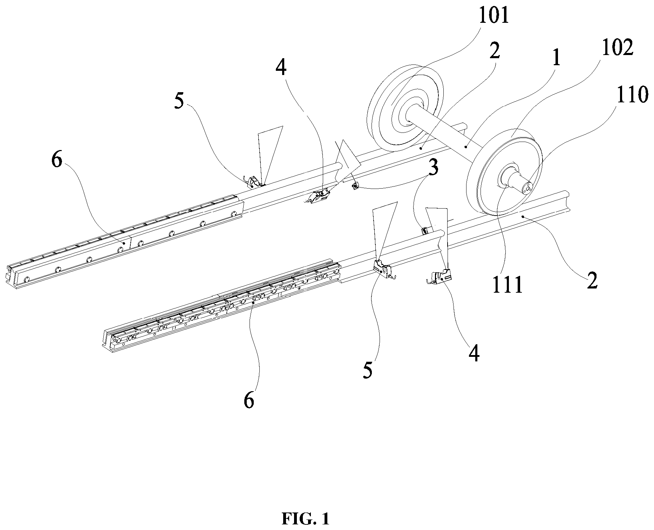

Referring to FIG 1, a specific implementation of the present disclosure provides an online high-precision measuring device for full-size parameters of a wheel set of a rail transit vehicle. The online high-precision measuring device for full-size parameters of a wheel set of a rail transit vehicle includes a first laser sensor 3, a second laser sensor 4, a third laser sensor 5, and a polygon measuring module 6. The to-be-measured wheel set is a wheel set 1, and a track where the wheel set 1 runs is a track 2. The wheel set 1 includes an inner side surface 101, a tread 102, an axle 110, and an axle lower profile 111. The first laser sensor 3, the second laser sensor 4 and the third laser sensor 5 each are provided with two laser sensing devices. The two laser sensing devices are symmetrically distributed along a center line of the track 2, and remain relatively static with the track 2. The first laser sensor 3 is arranged on an inner side of the track 2 at a certain angle, and is configured to measure data of an inner distance of the to-be-measured wheel set. The second laser sensor 4 is arranged below the track 2 at a certain angle, and is configured to measure data of a profile of the tread 102 of the wheel set. The third laser sensor 5 is arranged on an outer side of the track 2 at a certain angle, and is configured to measure data of the axle lower profile 111. The polygon measuring module 6 is butted with the track 2, and is configured to measure a radial runout value of the tread 102 of the wheel set.

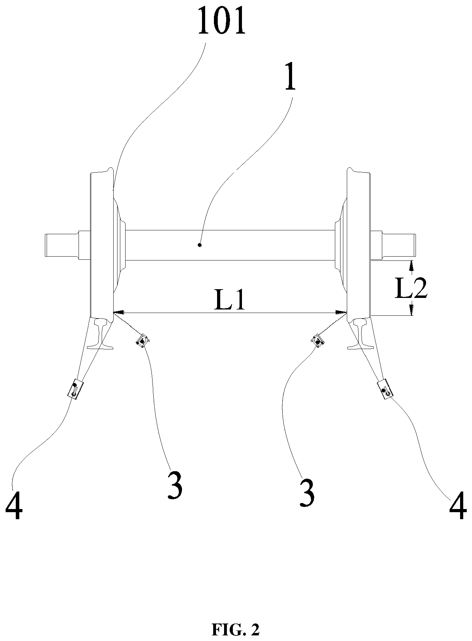

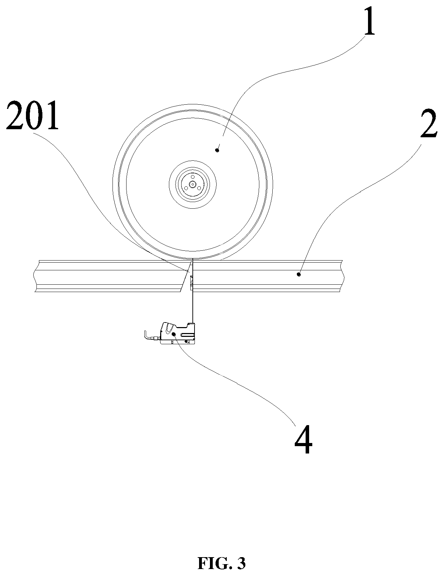

Referring to FIG 2, the first laser sensor 3 irradiates the inner side surface 101 of the wheel set by emitting a laser beam, so as to determine specific positions of two laser sensing devices in the first laser sensor 3, a specific width of the track 2 and a deflection angle of the first laser sensor 3. By irradiating the inner side surface 101 of the wheel set with the laser beam, a specific distance from the first laser sensor to the inner side surface 101 of the wheel set is determined, such that the data of the inner distance L1 of the wheel set is determined. The second laser sensor 4 irradiates a laser beam on the tread 102 of the wheel set to determine the data of the profile of the tread 102 of the wheel set. Referring to FIG 3, the track 2 is provided with a slit 201 directly above the second laser sensor 4. The laser beam emitted by the second laser sensor 4 irradiates the tread 102 of the wheel set through the slit 201. Referring to FIG. 1, the third laser sensor 5 is arranged on the outer side of the track 2, and can directly emit a laser beam to irradiate the axle lower profile 111 on the axle 110 of the wheel set to determine specific position data of the axle lower profile 111. Under the condition that the specific position of the third laser sensor 5 is clear, a spatial height distance L2 between the axle lower profile 111 and the upper surface of the track 2 can be determined. Further, under the condition that a radius of the axle 110 of the wheel set is clear, a spatial height position of a center of the axle 110 of the wheel set relative to the upper surface of the track 2 can be obtained, so as to calculate a wheel diameter of the wheel set 1.

The first laser sensor 3, the second laser sensor 4 and the third laser sensor 5 each are provided with a wheel sensor. After sensing the approaching of the wheel set 1, the first laser sensor 3, the second laser sensor 4 and the third laser sensor 5 start to work to ensure that other items are not detected, so as to prevent the existence of interference data in the stored data, and reduce energy consumption, which is more environmentally friendly.

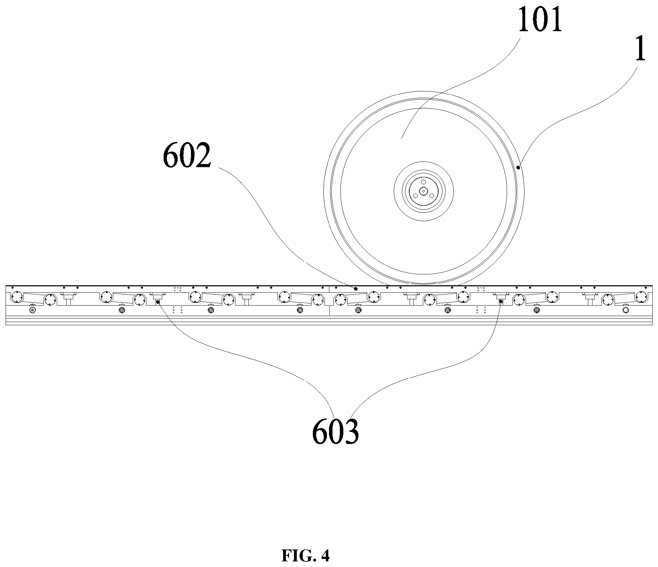

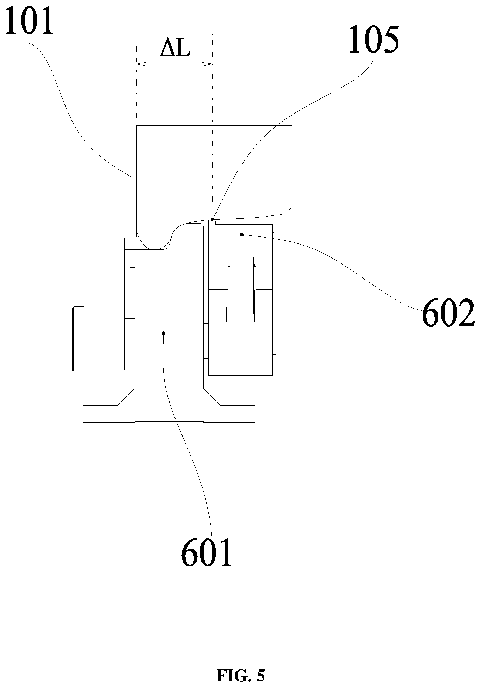

Referring to FIG 4 and FIG 5, the polygon measuring module 6 includes a guide rail 601, a floating probe 602 and a displacement sensor 603. The guide rail 601 is a main structure of the polygon measuring module 6, and is configured to support and guide the wheel set 1. The guide rail 601 is butted with the track 2. The floating probe 602 is arranged on the outer surface of the guide rail 601. The displacement sensor 603 and the floating probe 602 are parallel and are both arranged on the outer surface of the guide rail 601. The floating probe 602 is supported by a spring to float up and down. The floating probe 602 is always in contact with the tread 102 of the wheel set. The contact point is a standard measuring rolling circle 105. A distance between the standard measuring rolling circle 105 and the inner side surface 101 of the wheel set is ΔL=70 mm. The floating probe 602 floats up and down as the wheel set 1 runs, and the displacement sensor 603 is configured to measure a floating distance of the floating probe 602.

### Embodiment II

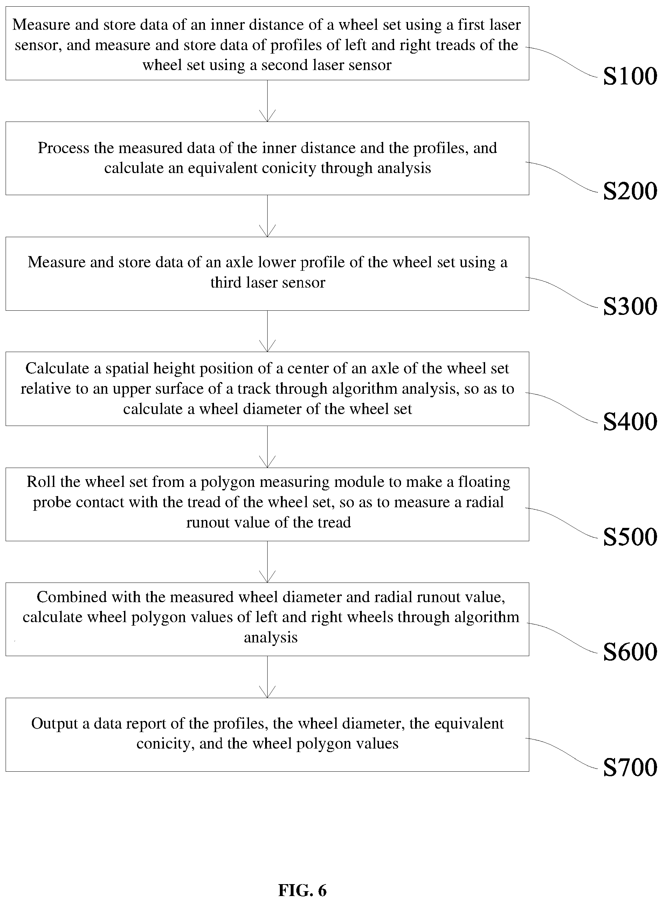

Referring to FIG 6, based on Embodiment I, the present further provides an online high-precision measuring method for full-size parameters of a wheel set of a rail transit vehicle. The measuring method includes the following steps.

S100: The data of the inner distance of the wheel set is measured and stored using the first laser sensor, and the data of the profile of the tread of the wheel set is measured and stored using the second laser sensor.

S200: The measured data of the inner distance and the profile is processed, and an equivalent conicity is calculated.

S300: The data of the axle lower profile of the wheel set is measured and stored using the third laser sensor.

S400: A spatial height position of a center of an axle of the wheel set relative to an upper surface of the track is calculated through algorithm analysis, so as to calculate a wheel diameter of the wheel set.

S500: The wheel set is rolled from the polygon measuring module to make the floating probe contact with the tread of the wheel set, so as to measure the radial runout value of the tread.

S600: A wheel polygon value of the wheel set is calculated through algorithm analysis the according to measured wheel diameter and radial runout value.

S700: A data report of the profile, the wheel diameter, the equivalent conicity, and the wheel polygon value is output.

In S100 and S300, the first laser sensor, the second laser sensor and the third laser sensor each are provided with a wheel sensor at a measuring position, and the wheel sensor is configured to detect whether the wheel reaches the measuring position. According to the detection results, the data such as the inner distance, the profile and the axle lower profile is selectively stored. The first laser sensor, the second laser sensor and the third laser sensor do not move with the wheel set, and remain relatively static. In S500, the up and down floating distance of the floating probe is determined using the displacement sensor, and the radial runout value of the tread of the wheel set is determined.

The above disclosed is only a preferred embodiment of the present disclosure, and definitely should not be used to limit the scope of the present invention, said scope being defined in the appended claims.

## Claims

1. An online high-precision measuring device for full-size parameters of a wheel set (1) of a rail transit vehicle, comprising: a first laser sensor (3), a second laser sensor (4), a third laser sensor (5), a track (2) with a slit (201) and a polygon measuring module (6), wherein
the first laser sensor (3) is arranged on an inner side of the track (2) bearing the wheel set (1) and configured to emit a laser beam to irradiate an inner side surface (101) of the wheel set (1) for determining an inner distance (L1) of the wheel set (1);
the second laser sensor (4) is arranged below the track (2) and configured to emit a laser to pass through the slit (201) formed in the track (2) and located above the second laser sensor (4) to irradiate a tread (102) of the wheel set (1) for determining a profile of the tread (102); and the slit is configured such that the laser beam emitted by the second laser sensor fully passes through the slit;
the third laser sensor (5) is arranged on an outer side of the track (2) and configured to emit a laser beam to irradiate an axle lower profile (111) of the wheel set (1) for determining position data of the axle lower profile (111);
the polygon measuring module (6) is butted with the track (2) and is configured to measure a radial runout value of the tread (102) of the wheel set (1);
the polygon measuring module (6) comprises a floating probe (602), and the floating probe (602) is supported by a spring to float up and down, and maintains contact with the tread (102) of the wheel set (1), such that the radial runout value of the tread (102) of the wheel set (1) is determined; and
the online high-precision measuring device is configured to process data measured by the first, second and third sensors to calculate the inner distance, the profile, an equivalent conicity, a wheel diameter, a wheel polygon value and the radial runout value.

2. The measuring device according to claim 1, wherein the polygon measuring module (6) further comprises a guide rail (601) and a displacement sensor (603); the guide rail (601) is a main supporting structure of the polygon measuring module (6), and is butted with the track (2) to support movement of the wheel set (1) and provide guidance; and the displacement sensor (603) is configured to measure an up and down floating distance of the floating probe (602).

3. The measuring device according to claim 1, wherein a distance between a contact point of the floating probe (602) and the tread (102) of the wheel set (1) and an inner side surface (101) of a wheel in the wheel set (1) is ΔL=70 mm.

4. The measuring device according to claim 1, wherein the first laser sensor (3), the second laser sensor (4) and the third laser sensor (5) each are provided with two laser sensing devices; and the two laser sensing devices are symmetrically distributed along a center line of the track (2).

5. The measuring device according to claim 3, wherein the first laser sensor (3), the second laser sensor (4) and the third laser sensor (5) each are arranged on the track (2) at a certain angle, and remain relatively static with the track (2).

6. The measuring device according to claim 3, wherein the first laser sensor (3), the second laser sensor (4) and the third laser sensor (5) each are provided with a wheel sensor configured to detect whether the wheel set (1) reaches a measuring position.

7. An online high-precision measuring method for full-size parameters of a wheel set (1) of a rail transit vehicle, using the measuring device according to claim 1, and comprising:
S100: measuring and storing the data of the inner distance (L1) of the wheel set (1) using the first laser sensor (3), and measuring and storing the data of the profile of the tread (102) of the wheel set (1) using the second laser sensor (4);
S200: processing the measured data of the inner distance (L1) and the profile, and calculating an equivalent conicity;
S300: measuring and storing the data of the axle lower profile (111) of the wheel set (1) using the third laser sensor (5);
S400: calculating a spatial height position of a center of an axle of the wheel set (1) relative to an upper surface of the track (2) through algorithm analysis, so as to calculate a wheel diameter of the wheel set (1);
S500: rolling the wheel set from the polygon measuring module (6) to make the floating probe (602) contact with the tread (102) of the wheel set (1), so as to measure the radial runout value of the tread (102);
S600: calculating a wheel polygon value of the wheel set (1) through algorithm analysis according to the measured wheel diameter and radial runout value; and
S700: outputting a data report of the profile, the wheel diameter, the equivalent conicity, and the wheel polygon value.

8. The measuring method according to claim 7, wherein in steps S100 and S300, the first laser sensor (3), the second laser sensor (4) and the third laser sensor (5) each are provided with a wheel sensor at a measuring position, and the wheel sensor is configured to detect whether the wheel reaches the measuring position.

9. The measuring method according to claim 7, wherein in steps S100 and S300, the first laser sensor (3), the second laser sensor (4) and the third laser sensor (5) do not move with the wheel set (1), and remain relatively static.

10. The measuring method according to claim 7, wherein in step S500, the up and down floating distance of the floating probe (602) is determined using the displacement sensor (603), and the radial runout value of the tread (102) of the wheel set (1) is determined.

## Patentansprüche

1. Hochpräzise Online-Messvorrichtung für vollständige Maßparameter eines Radsatzes (1) eines Schienenverkehrsfahrzeugs, **dadurch gekennzeichnet, dass** sie einen ersten Lasersensor (3), einen zweiten Lasersensor (4), einen dritten Lasersensor (5), ein Gleis (2) mit einem Schlitz (201) und ein Polygonmessmodul (6) umfasst,
wobei der erste Lasersensor (3) an einer Innenseite des den Radsatz (1) tragenden Gleises (2) angeordnet ist und dazu ausgebildet ist, einen Laserstrahl auszusenden, um eine Innenseitenfläche (101) des Radsatzes (1) zu bestrahlen, um einen inneren Abstand (L1) des Radsatzes (1) zu bestimmen;
wobei der zweite Lasersensor (4) unterhalb des Gleises (2) angeordnet ist und dazu ausgebildet ist, einen Laser auszusenden, der durch den im Gleis (2) ausgebildeten und oberhalb des zweiten Lasersensors (4) befindlichen Schlitz (201) hindurchtritt, um eine Lauffläche (102) des Radsatzes (1) zu bestrahlen, um ein Profil der Lauffläche (102) zu bestimmen; und wobei der Schlitz so ausgebildet ist, dass der von dem zweiten Lasersensor ausgesendete Laserstrahl vollständig durch den Schlitz hindurchtritt;
der dritte Lasersensor (5) an einer Außenseite des Gleises (2) angeordnet ist und dazu ausgebildet ist, einen Laserstrahl auszusenden, um ein unteres Achsprofil (111) des Radsatzes (1) zu bestrahlen, um Positionsdaten des Achsenunterprofils (111) zu bestimmen;
wobei das Polygonmessmodul (6) an das Gleis (2) anstößt und dazu ausgebildet ist, einen radialen Unrundheitswert der Lauffläche (102) des Radsatzes (1) zu messen;
das Polygonmessmodul (6) eine schwebende Sonde (602) umfasst, und die schwebende Sonde (602) durch eine Feder getragen wird, um auf und ab zu schweben, und mit der Lauffläche (102) des Radsatzes (1) in Kontakt bleibt, sodass der radiale Unrundheitswert der Lauffläche (102) des Radsatzes (1) bestimmt wird; und
die hochpräzise Online-Messvorrichtung konfiguriert ist, um von den ersten, zweiten und dritten Sensoren gemessene Daten zu verarbeiten, um den inneren Abstand, das Profil, eine äquivalente Konizität, einen Raddurchmesser, einen Radpolygonwert und den radialen Unrundheitswert zu berechnen.

2. Messvorrichtung nach Anspruch 1, **dadurch gekennzeichnet, dass** das Polygonmessmodul (6) weiterhin eine Führungsschiene (601) und einen Wegsensor (603) umfasst; die Führungsschiene (601) eine Haupttragstruktur des Polygonmessmoduls (6) ist und an das Gleis (2) anstößt, um die Bewegung des Radsatzes (1) zu unterstützen und eine Führung bereitzustellen; und wobei der Wegsensor (603) dazu ausgebildet ist, eine auf- und abwärts gerichtete Schwimmstrecke der schwebenden Sonde (602) zu messen.

3. Messvorrichtung nach Anspruch 1, **dadurch gekennzeichnet, dass** ein Abstand zwischen einem Kontaktpunkt der schwebenden Sonde (602) und der Lauffläche (102) des Radsatzes (1) und einer Innenseitenfläche (101) eines Rades im Radsatz (1) ΔL=70 mm beträgt.

4. Messvorrichtung nach Anspruch 1, **dadurch gekennzeichnet, dass** der erste Lasersensor (3), der zweite Lasersensor (4) und der dritte Lasersensor (5) jeweils mit zwei Lasersensoreinrichtungen ausgestattet sind; und die zwei Lasersensoreinrichtungen symmetrisch entlang einer Mittellinie des Gleises (2) verteilt sind.

5. Messvorrichtung nach Anspruch 3, **dadurch gekennzeichnet, dass** der erste Lasersensor (3), der zweite Lasersensor (4) und der dritte Lasersensor (5) jeweils in einem bestimmten Winkel auf dem Gleis (2) angeordnet sind und relativ zum Gleis (2) statisch bleiben.

6. Messvorrichtung nach Anspruch 3, **dadurch gekennzeichnet, dass** der erste Lasersensor (3), der zweite Lasersensor (4) und der dritte Lasersensor (5) jeweils mit einem Radsensor ausgestattet sind, der dafür ausgelegt ist, zu erfassen, ob der Radsatz (1) eine Messposition erreicht hat.

7. Hochpräzises Online-Messverfahren für die vollständige Maßparameter eines Radsatzes (1) eines Schienenverkehrsfahrzeugs unter Verwendung der Messvorrichtung nach Anspruch 1, **dadurch gekennzeichnet, dass** es umfasst:
S100: Messen und Speichern der Daten des inneren Abstands (L1) des Radsatzes (1) unter Verwendung des ersten Lasersensors (3) sowie Messen und Speichern der Daten des Profils der Lauffläche (102) des Radsatzes (1) unter Verwendung des zweiten Lasersensors (4);
S200: Verarbeiten der gemessenen Daten des inneren Abstands (L1) und des Profils sowie Berechnen einer äquivalenten Konizität.
S300: Messen und Speichern der Daten des unteren Achsprofils (111) des Radsatzes (1) unter Verwendung des dritten Lasersensors (5);
S400: Berechnen der räumlichen Höhenposition der Mitte einer Achse des Radsatzes (1) relativ zur Oberfläche des Gleises (2) durch Algorithmusanalyse, um den Raddurchmesser des Radsatzes (1) zu berechnen;
S500: Rollen des Radsatzes vom Polygonmessmodul (6), um die schwebende Sonde (602) mit der Lauffläche (102) des Radsatzes (1) in Kontakt zu bringen, um so den radialen Unrundheitswert der Lauffläche (102) zu messen;
S600: Berechnen eines Radpolygonwerts des Radsatzes (1) durch Algorithmusanalyse gemäß dem gemessenen Raddurchmesser und radialen Unrundheitswert; und
S700: Ausgeben eines Datenberichts des Profils, des Raddurchmessers, der äquivalenten Konizität und des Radpolygonwerts.

8. Messverfahren nach Anspruch 7, **dadurch gekennzeichnet, dass** in den Schritten S100 und S300 der erste Lasersensor (3), der zweite Lasersensor (4) und der dritte Lasersensor (5) jeweils mit einem Radsensor an einer Messposition versehen sind, und der Radsensor dafür ausgelegt ist, zu erfassen, ob das Rad die Messposition erreicht.

9. Messverfahren nach Anspruch 7, **dadurch gekennzeichnet, dass** in den Schritten S100 und S300 der erste Lasersensor (3), der zweite Lasersensor (4) und der dritte Lasersensor (5) sich nicht mit dem Radsatz (1) bewegen und relativ statisch bleiben.

10. Messverfahren nach Anspruch 7, **dadurch gekennzeichnet, dass** in Schritt S500 die auf- und abwärtige Schwimmstrecke der schwebenden Sonde (602) unter Verwendung des Wegsensors bestimmt wird und der radiale Unrundheitswert der Lauffläche (102) des Radsatzes (1) bestimmt wird.

## Revendications

1. Dispositif de mesure en ligne de haute précision pour les paramètres complets d'un essieu monté (1) d'un véhicule de transport ferroviaire, **caractérisé en ce que** il comprend: un premier capteur laser (3), un deuxième capteur laser (4), un troisième capteur laser (5), une voie (2) comportant une fente (201) et un module de mesure polygonale (6),
le premier capteur laser (3) est monté sur un côté intérieur de la voie (2) supportant l'essieu monté (1) et configuré pour émettre un faisceau laser afin d'irradier une surface latérale intérieure (101) de l'essieu monté (1) pour déterminer une distance intérieure (L1) de l'essieu monté (1);
le deuxième capteur laser (4) est monté en dessous de la voie (2) et configuré pour émettre un faisceau laser traversant la fente (201) positionnée et formée dans la voie (2) et positionnée au-dessus du deuxième capteur laser (4) afin d'irradier une bandage de roulement (102) de l'essieu monté (1) pour déterminer un profil de la bandage de roulement (102); la fente étant configurée pour permettre au faisceau laser émis par le deuxième capteur laser de traverser entièrement la fente;
le troisième capteur laser (5) est monté sur un côté extérieur de la voie (2) et configuré pour émettre un faisceau laser afin d'irradier un profil inférieur d'essieu (111) de l'essieu monté (1) pour déterminer les données de position du profil inférieur d'essieu (111) ;
le module de mesure polygonale (6) est abouté à la voie (2) et est configuré pour mesurer une valeur de voile radial de la bandage de roulement (102) de l'essieu monté (1) ;
le module de mesure polygonale (6) comprend une sonde flottante (602), la sonde flottante (602) étant supportée par un ressort pour flotter vers le haut et le bas, et maintient un contact avec la bandage de roulement (102), de sorte que la valeur de voile radial de la bandage de roulement (102) est déterminée;
le dispositif de mesure en ligne de haute précision est configuré pour traiter les données mesurées par les premier, deuxième et troisième capteurs afin de calculer la distance intérieure, le profil, une conicité équivalente, un diamètre de roue, une valeur de polygonalisation de roue et la valeur de voile radial.

2. Dispositif de mesure selon la revendication 1, **caractérisé en ce que** le module de mesure polygonale (6) comprend en outre un rail de guidage (601) et un capteur de déplacement (603); le rail de guidage (601) étant une structure de support principale du module de mesure polygonale (6) et abouté à la voie (2) pour supporter le mouvement de l'essieu monté (1) et fournir un guidage ; le capteur de déplacement (603) étant configuré pour mesurer une distance de flottement vers le haut et le bas de la sonde flottante (602).

3. Dispositif de mesure selon la revendication 1, **caractérisé en ce qu'**une distance parallele entre un point où la sonde flottante (602) contact la bandage de roulement (102) de l'essieu monté (1) et une surface latérale intérieure (101) d'une roue dans l'essieu monté (1) est ΔL = 70 mm.

4. Dispositif de mesure selon la revendication 1, **caractérisé en ce que** le premier capteur laser (3), le deuxième capteur laser (4) et le troisième capteur laser (5) sont chacun pourvus de deux dispositifs de détection laser; et les deux dispositifs de détection laser sont répartis symétriquement le long d'une ligne centrale de la voie (2).

5. Dispositif de mesure selon la revendication 3, **caractérisé en ce que** le premier capteur laser (3), le deuxième capteur laser (4) et le troisième capteur laser (5) sont chacun montés sur la voie (2) selon un certain angle et restent statiques par rapport à la voie (2).

6. Dispositif de mesure selon la revendication 3, **caractérisé en ce que** le premier capteur laser (3), le deuxième capteur laser (4) et le troisième capteur laser (5) sont chacun pourvus d'un capteur de roue configuré pour détecter si l'essieu monté (1) atteint une position de mesure.

7. Procédé de mesure en ligne de haute précision pour les paramètres complets d'un essieu monté d'un véhicule de transport ferroviaire utilisant le dispositif de mesure selon la revendication 1, **caractérisé en ce que** le procédé comprend:
S100 : mesurer et stocker les données de la distance intérieure (L1) de l'essieu monté (1) via le premier capteur laser (3), et mesurer et stocker les données du profil de la bandage de roulement (102) de l'essieu monté (1) via le deuxième capteur laser (4) ;
S200 : traiter les données mesurées de la distance intérieure (L1) et du profil, et calculer une conicité équivalente ;
S300 : mesurer et stocker les données du profil inférieur d'essieu (111) de l'essieu monté (1) via le troisième capteur laser (5) ;
S400 : calculer une position de hauteur spatiale d'un centre d'essieu de l'essieu monté (1) par rapport à une surface supérieure de la voie (2) par analyse algorithmique, de manière à calculer un diamètre de roue de l'essieu monté (1) ;
S500 : faire rouler l'essieu monté depuis le module de mesure polygonale (6) pour mettre la sonde flottante (602) en contact avec la bandage de roulement (102), afin de mesurer la valeur de voile radial de la bandage de roulement (102) ;
S600 : calculer une valeur de polygonalisation de roue de l'essieu monté (1) par analyse algorithmique en combinaison avec le diamètre de roue mesuré et avec la valeur de voile radial ; et
S700 : générer un rapport de données du profil, du diamètre de roue, de la conicité équivalente et de la valeur de polygonalisation de roue.

8. Procédé de mesure selon la revendication 7, **caractérisé en ce que**, dans les étapes S100 et S300, le premier capteur laser (3), le deuxième capteur laser (4) et le troisième capteur laser (5) sont chacun pourvus d'un capteur de roue à une position de mesure pour détecter si la roue atteint la position de mesure.

9. Procédé de mesure selon la revendication 7, **caractérisé en ce que**, dans les étapes S100 et S300, le premier capteur laser (3), le deuxième capteur laser (4) et le troisième capteur laser (5) ne se déplacent pas avec l'essieu monté (1) et restent statiques.

10. Procédé de mesure selon la revendication 7, **caractérisé en ce que**, dans l'étape S500, la distance de flottement vers le haut et le bas de la sonde flottante (602) est déterminée en utilisant le capteur de déplacement (603), et ensuite la valeur de voile radial de la bandage de roulement (102) de l'essieu monté (1) est déterminée.
